# EUROPEAN PATENT APPLICATION

(11) **EP 4 822 614 A1**
(43) Date of publication of application: **14.10.2026**
(21) Application number: 24917098.6
(22) Date of filing: 29.08.2024
(51) Int. Cl.: G06N 20/00, G06N 3/096, G06Q 50/04

(54) **MATERIAL QUALITY ESTIMATION MODEL CREATION METHOD, MATERIAL QUALITY ESTIMATION METHOD, MATERIAL QUALITY ESTIMATION MODEL CREATION DEVICE, MATERIAL QUALITY ESTIMATION DEVICE, AND MATERIAL QUALITY ESTIMATION MODEL CREATION SYSTEM**

(30) Priority: 09.01.2024 JP 2024001087
(71) Applicant: JFE Steel Corporation, Tokyo 100-0011 (JP)
(72) Inventor: TAKAGI, Hiroyuki, Tokyo 100-0011 (JP)
(74) Representative: Grünecker Patent- und Rechtsanwälte PartG mbB
(86) International application number: PCT/JP2024/030866
(87) International publication number: WO 2025/150223

(57) **Abstract**

A material quality estimation model generation method includes: a material quality estimation base model generating step of performing, by a model generation unit of a computer, machine learning using existing manufacturing condition data as an input and existing quality data associated with the existing manufacturing condition data as an output to generate a material quality estimation base model; and a material quality estimation model relearning step of performing, by the model generation unit, relearning of the material quality estimation base model using additional manufacturing condition data as an input and additional quality data associated with the additional manufacturing condition data as an output to generate a material quality estimation model.

## Description

### Field

The present invention relates to a material quality estimation model generation method, a material quality estimation method, a material quality estimation model generation device, a material quality estimation device, and a material quality estimation model generation system.

### Background

Patent Literature 1 discloses a quality prediction system that predicts quality of a target product from similarity between a prediction model for learning and a quality prediction model derived from an actual operational condition of the target product. In this system, a machine learning algorithm is applied to construction of the prediction model, and an occurrence probability of a defect is estimated with high accuracy.

Patent Literature 2 discloses a prediction system including a prediction model which acquires, as an input, input data including a manufacturing facility output factor of a metal plate and a component value of the metal plate being manufactured and predicts a material characteristic value of the metal plate to be manufactured. This system estimate a material characteristic value with high accuracy by applying a machine learning algorithm in which a model which inputs input data and outputs a manufacturing condition factor and a model which inputs the manufacturing condition factor and outputs the material characteristic value.

### Citation List

### Patent Literature

Patent Literature 1: JP 6953990 B2
Patent Literature 2: JP 2022-48038 A

### Summary

### Technical Problem

However, the material quality estimation models as disclosed in Patent Literatures 1 and 2 are models applied to a material manufactured under manufacturing conditions similar to or analogous to those of an already manufactured material in actual manufacturing facilities. That is, the material quality estimation models as disclosed in Patent Literatures 1 and 2 are generally generated on the premise that a large number of pieces of manufacturing condition data and quality data exist.

On the other hand, in development of a new manufacturing material, it is common to verify whether a material manufactured under newly designed manufacturing conditions satisfies a desired quality by performing a preliminary experiment in experimental facilities. The above preliminary experiment is usually performed by precisely designing and controlling only some types of manufacturing conditions that are assumed to contribute largely to determination of quality of a material. Therefore, in the preliminary experiment, other manufacturing conditions including environmental conditions, disturbance conditions, and the like existing only at the time of manufacturing a material with actual manufacturing facilities are hardly considered. In addition, since the number of times of trial of the experiment is usually small due to positioning of the preliminary experiment, the number of pieces of experimental result data that can be acquired is also small.

When new manufacture is performed with actual manufacturing facilities based on manufacturing conditions designed in the preliminary experiment as described above, there is a problem that a desired material quality cannot be obtained as a result in many cases due to a difference from actual manufacture, the difference having not been considered in the preliminary experiment. In addition, in starting manufacture of a new material, it is not easy to generate an accurate material quality estimation model because experimental condition data and quality data at the time of the preliminary experiment do not sufficiently exist as described above.

The present invention has been made in view of the above, and an object thereof is to provide a material quality estimation model generation method, a material quality estimation method, a material quality estimation model generation device, a material quality estimation device, and a material quality estimation model generation system, capable of generating a model that estimates quality of a new manufacturing material with high accuracy. Solution to Problem

To solve the above-described problem and achieve the object, a material quality estimation model generation method according to the present invention includes: a material quality estimation base model generating step of generating a material quality estimation base model by a model generation unit of a computer by performing machine learning using existing manufacturing condition data as an input and existing quality data associated with the existing manufacturing condition data as an output; and a material quality estimation model relearning step of generating a material quality estimation model by the model generation unit by performing relearning of the material quality estimation base model using additional manufacturing condition data as an input and additional quality data associated with the additional manufacturing condition data as an output.

In the above-described material quality estimation model generation method according to the present invention, the existing manufacturing condition data is data regarding an existing manufacturing material, and the additional manufacturing condition data is data regarding a new manufacturing material.

In the above-described material quality estimation model generation method according to the present invention, the material quality estimation model relearning step includes performing, by the model generation unit, when types of the additional manufacturing condition data are insufficient with respect to types of the existing manufacturing condition data to be inputs of the material quality estimation base model, relearning of the material quality estimation base model by adding types of the additional manufacturing condition data so as to match the types of the existing manufacturing condition data.

In the above-described material quality estimation model generation method according to the present invention, the material quality estimation model relearning step includes performing, for types of the additional manufacturing condition data insufficient with respect to the existing manufacturing condition data, addition by performing complementation for each insufficient type using a statistic of a corresponding type of the existing manufacturing condition data by the model generation unit.

In the above-described material quality estimation model generation method according to the present invention, the material quality estimation model relearning step includes performing, for types of the additional manufacturing condition data insufficient with respect to the existing manufacturing condition data, addition by performing complementation for each insufficient type using a sample value randomly extracted from corresponding types of the existing manufacturing condition data by the model generation unit.

In the above-described material quality estimation model generation method according to the present invention, the material quality estimation model relearning step includes extracting locally, by the model generation unit, only manufacturing condition data similar to the additional manufacturing condition data from a set of the existing manufacturing condition data in a type of manufacturing condition data that already matches between the existing manufacturing condition data and the additional manufacturing condition data, and performing, for types of the additional manufacturing condition data insufficient with respect to the existing manufacturing condition data, addition by performing complementation for each insufficient type using a statistic of a corresponding type of the existing manufacturing condition data by the model generation unit.

In the above-described material quality estimation model generation method according to the present invention, the material quality estimation model relearning step includes extracting locally, by the model generation unit, manufacturing condition data similar to the additional manufacturing condition data from a set of the existing manufacturing condition data in a type of manufacturing condition data that already matches between the existing manufacturing condition data and the additional manufacturing condition data, and performing, for types of the additional manufacturing condition data insufficient with respect to the existing manufacturing condition data, addition by performing complementation for each insufficient type using a sample value randomly extracted from corresponding types of the existing manufacturing condition data by the model generation unit.

In the above-described material quality estimation model generation method according to the present invention, the material quality estimation model relearning step includes generating, by the model generation unit, when types of the additional manufacturing condition data are insufficient with respect to types of the existing manufacturing condition data to be inputs of the material quality estimation base model, the material quality estimation base model by reducing the types of the existing manufacturing condition data so as to match the types of the existing manufacturing condition data.

In the above-described material quality estimation model generation method according to the present invention, a method for relearning the material quality estimation base model is transfer learning.

In the above-described material quality estimation model generation method according to the present invention, a method for relearning the material quality estimation base model is fine tuning.

To solve the above-described problem and achieve the object, a material quality estimation method according to the present invention includes a quality estimation step of estimating, by a quality estimation unit of a computer, quality of a manufactured product based on a material quality estimation model generated by the material quality estimation model generation method.

To solve the above-described problem and achieve the object, a material quality estimation model generation device according to the present invention includes a model generation unit configured to perform machine learning using existing manufacturing condition data as an input and existing quality data associated with the existing manufacturing condition data as an output to generate a material quality estimation base model, wherein the model generation unit is configured to perform relearning of the material quality estimation base model using additional manufacturing condition data as an input and additional quality data associated with the additional manufacturing condition data as an output to generate a material quality estimation model.

To solve the above-described problem and achieve the object, a material quality estimation device according to the present invention includes a quality estimation unit configured to estimate quality of a manufactured product based on a material quality estimation model generated by the material quality estimation model generation device.

To solve the above-described problem and achieve the object, a material quality estimation model generation system according to the present invention includes a model generation device configured to perform machine learning using existing manufacturing condition data as an input and existing quality data associated with the existing manufacturing condition data as an output to generate a material quality estimation base model, wherein the model generation device is configured to perform relearning of the material quality estimation base model using additional manufacturing condition data as an input and additional quality data associated with the additional manufacturing condition data as an output to generate a material quality estimation model.

### Advantageous Effects of Invention

In the material quality estimation model generation method, the material quality estimation model generation device, and the material quality estimation model generation according to the present invention, a machine learning model based on existing manufacturing condition data is used as a base model, and relearning is performed using preliminary experimental data (additional manufacturing condition data) of a new manufacturing material. As a result, it is possible to generate a model capable of estimating a material quality with high accuracy even when manufacturing data does not sufficiently exist at the time of actually manufacturing a new manufacturing material.

In the material quality estimation method and the material quality estimation device according to the present invention, it is possible to estimate variations in material quality in a case where variations in manufacturing conditions in a new manufacturing material are assumed in advance by using the model generated as described above. In addition, in the material quality estimation method and the material quality estimation device according to the present invention, it is possible to perform material design under manufacturing conditions that do not deviate from an allowable range of quality variations. As a result, material development can be efficiently performed.

### Brief Description of Drawings

[FIG. 1] FIG. 1 is a diagram illustrating a schematic configuration of an information processing device that implements a material quality estimation model generation device and a material quality estimation device according to an embodiment of the present invention.
[FIG. 2] FIG. 2 is a diagram for describing an outline of transfer learning in the material quality estimation model generation device according to the embodiment of the present invention.
[FIG. 3] FIG. 3 is a diagram for describing an example of a case where transfer learning is performed by adding types of additional manufacturing condition data when types of the additional manufacturing condition data are insufficient with respect to types of existing manufacturing condition data to be an input of a material quality estimation base model in the material quality estimation model generation device according to the embodiment of the present invention.
[FIG. 4] FIG. 4 is a flowchart illustrating a procedure of a material quality estimation model generation method executed by the material quality estimation model generation device according to the embodiment of the present invention.

### Description of Embodiments

A material quality estimation model generation method (hereinafter, referred to as a "model generation method"), a material quality estimation method, a material quality estimation model generation device (hereinafter, referred to as a "model generation device"), and a material quality estimation device according to an embodiment of the present invention will be described with reference to the drawings. Note that the components in the following embodiment include those that can be easily replaced by those skilled in the art or those that are substantially the same.

### (Device configuration)

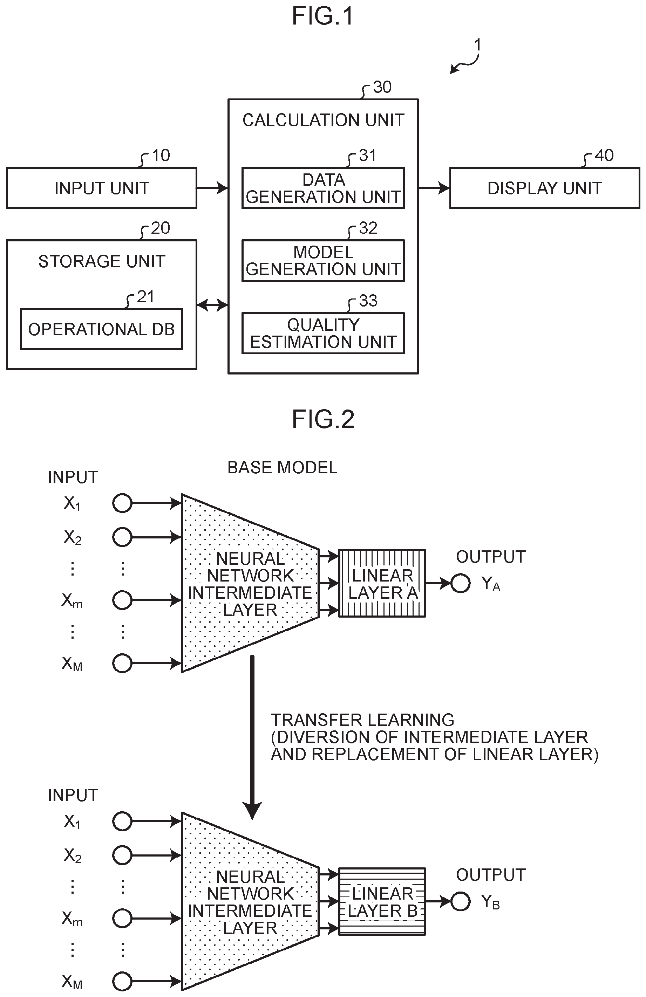

FIG. 1 illustrates an example of a configuration of an information processing device 1 for implementing the model generation device and the material quality estimation device according to the embodiment. The information processing device 1 includes an input unit 10, a storage unit 20, a calculation unit 30, and a display unit 40. The model generation device according to the embodiment is implemented by components excluding a quality estimation unit 33 of the calculation unit 30 in the configuration of the information processing device 1. The material quality estimation device according to the embodiment is implemented by all the components of the information processing device 1.

The input unit 10 is an input means to the calculation unit 30, and is implemented by an input device such as a keyboard, a mouse pointer, or a numeric keypad.

The storage unit 20 is constituted by a recording medium such as an erasable programmable ROM (EPROM), a hard disk drive (HDD), or a removable medium. Examples of the removable medium include a disk recording medium such as a universal serial bus (USB) memory, a compact disc (CD), a digital versatile disc (DVD), or a Blu-ray (registered trademark) disc (BD). The storage unit 20 can store an operating system (OS), various programs, various tables, various databases, and the like. The storage unit 20 stores an operational database (DB) 21.

The operational DB 21 stores existing manufacturing condition data, existing quality data, additional manufacturing condition data, and additional quality data. The existing manufacturing condition data and the existing quality data are data used in actual facilities, and the number of pieces of the data is abundant. On the other hand, the additional manufacturing condition data and the additional quality data are data used in experimental facilities, for example, at the time of development of a new manufacturing material, and the number of pieces of the data is generally limited.

The existing manufacturing condition data indicates existing data obtained by measuring a manufacturing state at the time of manufacturing a product or estimating the manufacturing state by some means. The existing manufacturing condition data is preferably data that varies depending on a position in a product.

The existing quality data indicates existing data obtained by measuring quality of a product or estimating the quality by some means. This existing quality data is preferably data at a specific position in a product although a way of measurement or estimation varies depending on the type of the quality.

The additional manufacturing condition data indicates additional data obtained by measuring a manufacturing state at the time of manufacturing a product or estimating the manufacturing state by some means. The additional manufacturing condition data is preferably data that varies depending on a position in a product.

The additional quality data indicates additional data obtained by measuring quality of a product or estimating the quality by some means. This additional quality data is preferably data at a specific position in a product although a way of measurement or estimation varies depending on the type of the quality.

The calculation unit 30 is implemented by, for example, a processor constituted by a central processing unit (CPU) or the like and a memory (main storage unit) constituted by a random access memory (RAM), a read only memory (ROM), and the like.

The calculation unit 30 loads a program into a work area of the main storage unit and executes the program, and controls each constituent unit and the like through the execution of the program, thereby implementing a function matching a predetermined purpose. The calculation unit 30 functions as a data generation unit 31, a model generation unit 32, and the quality estimation unit 33 through the above-described execution of a program. Note that although FIG. 1 illustrates an example in which functions of the units are implemented by one computer, a specific method for implementing the functions of the units is not particularly limited, and for example, the functions of the units may be implemented by a plurality of computers.

The data generation unit 31 generates data necessary for generating a material quality estimation base model described later. That is, the data generation unit 31 collects existing manufacturing condition data and existing quality data from the operational DB 21. Subsequently, the data generation unit 31 generates existing manufacturing data by associating the existing manufacturing condition data with the existing quality data. As described above, this existing manufacturing data is data regarding an existing manufacturing material.

Specifically, the data generation unit 31 aggregates and combines the collected existing manufacturing condition data and existing quality data with each other. That is, the data generation unit 31 associates data obtained by measuring or estimating a physical state of a product with data obtained by measuring or estimating quality of the product. Here, in the generation of the existing manufacturing data, it is desirable to associate a specific position of a product for which existing quality data is measured or estimated with existing manufacturing condition data measured or estimated at the same position.

In addition, the data generation unit 31 generates data necessary for generating a material quality estimation model described later. That is, the data generation unit 31 collects additional manufacturing condition data and additional quality data from the operational DB 21. Subsequently, the data generation unit 31 generates additional manufacturing data by associating the additional manufacturing condition data with the additional quality data. As described above, this additional manufacturing data is data regarding a new manufacturing material.

Specifically, the data generation unit 31 aggregates and combines the collected additional manufacturing condition data and additional quality data with each other. That is, the data generation unit 31 associates data obtained by measuring or estimating a physical state of a product with data obtained by measuring or estimating quality of the product. Here, in the generation of the additional manufacturing data, it is desirable to associate a specific position of a product for which additional quality data is measured or estimated with additional manufacturing condition data measured or estimated at the same position.

The model generation unit 32 generates a material quality estimation base model using the existing manufacturing data. That is, the model generation unit 32 performs machine learning using existing manufacturing condition data as an input and existing quality data associated with the existing manufacturing condition data as an output to generate a material quality estimation base model representing a relationship between a manufacturing condition and quality. A machine learning algorithm having a neural network structure is used for this learning of the material quality estimation base model.

When the existing manufacturing data is used as manufacturing data of an already manufactured material in actual manufacturing facilities, there are many cases where the number of pieces of data sufficient for performing machine learning can be ensured. As a result, a model with high estimation accuracy, that is, with high generalization performance can be generated even for unknown data.

In addition, the model generation unit 32 generates a material quality estimation model using the material quality estimation base model and the additional manufacturing data. That is, the model generation unit 32 performs relearning of the material quality estimation base model using additional manufacturing condition data as an input and additional quality data associated with the additional manufacturing condition data as an output to generate a material quality estimation model for additional manufacturing data.

For relearning, for example, transfer learning is used. FIG. 2 illustrates an outline of transfer learning. In the transfer learning, generally, in a case where a model M_{A} that estimates an output Y_{A} with high accuracy is trained and generated for a certain input X = [X₁, X₂,..., Xₘ,..., X_{M}], a region from an input layer to an intermediate layer of the model M_{A} are diverted, and only a linear layer A close to an output layer is replaced with another linear layer B. Then, the model is trained with data of another output Y_{B} for the input X = [X₁, X₂,..., Xₘ,..., X_{M}] to generate a model M_{B} that estimates the output Y_{B} with high accuracy.

Here, the linear layer is also referred to as a fully connected layer. In addition, in transfer learning, since the input layer and the intermediate layer of the model M_{A} already trained are diverted, it is known that a highly accurate model can be generated even if the number of pieces of data at the time of training the model M_{B} is smaller than that in general supervised learning. In the present embodiment, when the additional manufacturing data is manufacturing data in a preliminary experiment of a new manufacturing material, there is a case where the number of pieces of data sufficient for performing general machine learning cannot be ensured. Even when the number of pieces of additional manufacturing data is limited as described above, it is possible to generate a highly accurate material quality estimation model for the additional manufacturing data by using transfer learning.

Furthermore, when types of the additional manufacturing condition data are insufficient with respect to types of the existing manufacturing condition data to be inputs of the material quality estimation base model, the model generation unit 32 performs relearning of the material quality estimation base model by adding types of the additional manufacturing condition data so as to match the types of the existing manufacturing condition data. In this case, the model generation unit 32 adds types of the additional manufacturing condition data as in the following (1) to (4), for example.
(1) For types of the additional manufacturing condition data insufficient with respect to the existing manufacturing condition data, addition is made by performing complementation for each insufficient type using a statistic (for example, an average value) of a corresponding type of the existing manufacturing condition data.
(2) For type of additional manufacturing condition data insufficient with respect to existing manufacturing condition data, addition is made by performing complementation for each insufficient type using a sample value randomly extracted from corresponding types of the existing manufacturing condition data.
(3) In types of manufacturing condition data, in which the types of the existing manufacturing condition data and the types of the additional manufacturing condition data already match each other, from a set of the existing manufacturing condition data, only manufacturing condition data similar to the additional manufacturing condition data is locally extracted. Then, for types of the additional manufacturing condition data insufficient with respect to the existing manufacturing condition data, addition is made by performing complementation for each insufficient type using a statistic of a corresponding type of the existing manufacturing condition data locally extracted.
(4) In types of manufacturing condition data, in which the types of the existing manufacturing condition data and the types of the additional manufacturing condition data already match each other, from a set of the existing manufacturing condition data, only manufacturing condition data similar to the additional manufacturing condition data is locally extracted. Then, for types of the additional manufacturing condition data insufficient with respect to the existing manufacturing condition data, addition is made by performing complementation for each insufficient type using a sample value randomly extracted from a corresponding type of the existing manufacturing condition data locally extracted.

Here, in the above (3) and (4), as a method for locally extracting only manufacturing condition data similar to the additional manufacturing condition data from the set of the existing manufacturing condition data, for example, a Just-In-Time method can be used. In the Just-In-Time method, in types of manufacturing condition data, in which the types of the existing manufacturing condition data and the types of the additional manufacturing condition data already match each other, from a set of the existing manufacturing condition data, only data near the additional manufacturing condition data as a requirement point is locally extracted.

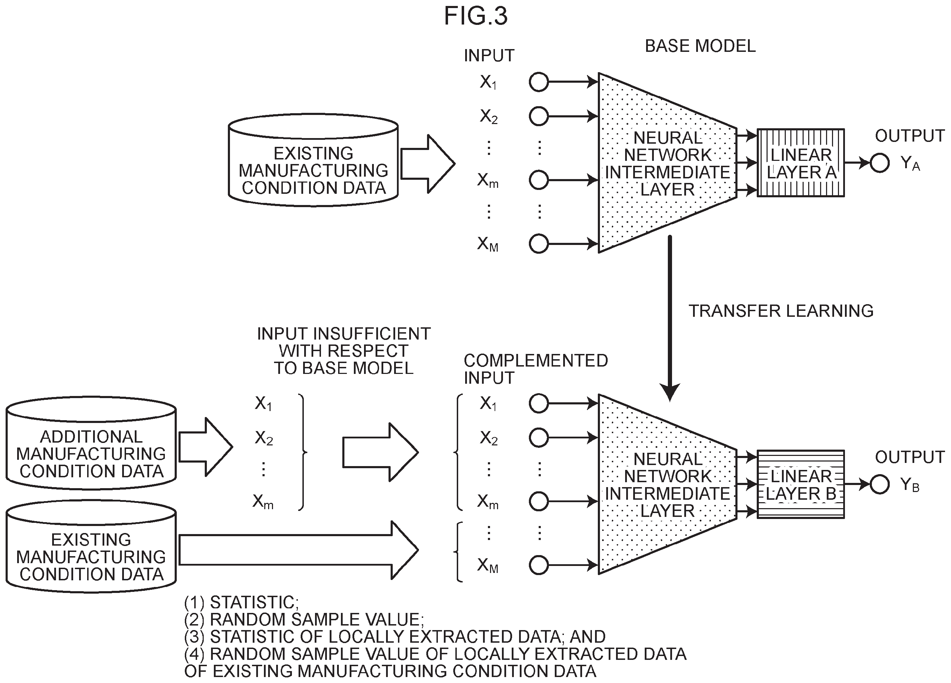

FIG. 3 illustrates a method for complementing types of the additional manufacturing condition data. For example, the existing manufacturing data is used as manufacturing data in actual manufacturing facilities of an already manufactured material, and the additional manufacturing data is used as manufacturing data in a preliminary experiment of a new manufacturing material. In this case, for example, relearning is performed from a material quality estimation base model trained using manufacturing data of an already manufactured material using some types of manufacturing conditions designed in a preliminary experiment of a new manufacturing material. As a result, it is possible to perform relearning in consideration of other manufacturing conditions including environmental conditions, disturbance conditions, and the like existing only at the time of manufacturing a material with actual manufacturing facilities.

Note that, in the above (1) to (4), types of the additional manufacturing condition data insufficient with respect to the existing manufacturing condition data are added, but conversely, types of the existing manufacturing condition data may be reduced. That is, when it is already known that types of the additional manufacturing condition data are insufficient with respect to types of the existing manufacturing condition data at a stage of generating the material quality estimation base model, types of the existing manufacturing condition data to be inputs of the material quality estimation base model may be reduced.

When types of additional manufacturing condition data are insufficient with respect to types of existing manufacturing condition data to be an input of a material quality estimation base model, the model generation unit 32 generates a material quality estimation base model by reducing the types of the existing manufacturing condition data so as to match the types of the existing manufacturing condition data. As described above, by reducing in advance types of the existing manufacturing condition data to be inputs of the material quality estimation base model, types of the additional manufacturing condition data can be made the same as types of the existing manufacturing condition data at the time of relearning of the material quality estimation base model.

In addition, in the present embodiment, the method using a general neural network algorithm has been exemplified, but the specific algorithm is not limited as long as it is a machine learning algorithm capable of performing transfer learning. In addition, in the present embodiment, the method using transfer learning has been exemplified, but fine tuning may be used instead of transfer learning.

The quality estimation unit 33 estimates quality of a manufactured product based on the material quality estimation model generated by the model generation unit 32. That is, the quality estimation unit 33 inputs manufacturing condition data of a product for which quality has been estimated to the material quality estimation model, whereby a quality estimation result is output from the material quality estimation model.

The display unit 40 is implemented by, for example, a display device such as an LCD display or a CRT display. Based on a display signal input from the calculation unit 30, the display unit 40 displays, for example, a quality estimation result obtained by the quality estimation unit 33 in a form of a character, a figure, or the like.

### (Model generation method)

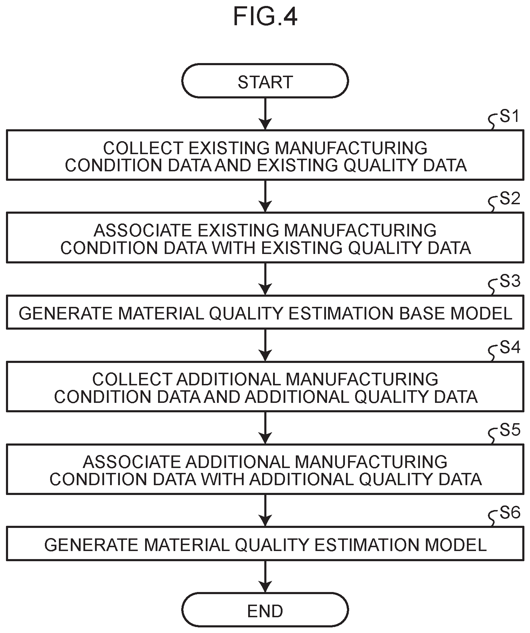

A model generation method performed by the model generation device according to the embodiment will be described with reference to FIG. 4. The model generation method includes an existing manufacturing data collecting step (step S1), an existing manufacturing data generating step (step S2), and a material quality estimation base model generating step (step S3). The model generation method further includes an additional manufacturing data collecting step (step S4), an additional manufacturing data generating step (step S5), and a material quality estimation model relearning step (step S6). Note that timings of executing steps S4 and S5 are not particularly limited, and steps S4 and S5 may be executed in parallel with steps S1 and S2.

In the existing manufacturing data collecting step, the data generation unit 31 collects existing manufacturing condition data and existing quality data (step S1).

In the existing manufacturing data generating step, the data generation unit 31 generates existing manufacturing data by associating the existing manufacturing condition data with the existing quality data (step S2).

In the material quality estimation base model generating step, the model generation unit 32 performs machine learning using the existing manufacturing condition data as an input and the existing quality data as an output to generate a material quality estimation base model (step S3).

In the additional manufacturing data collecting step, the data generation unit 31 collects additional manufacturing condition data and additional quality data (step S4).

In the additional manufacturing data generating step, the data generation unit 31 generates additional manufacturing data by associating the additional manufacturing condition data with the additional quality data (step S5).

In the material quality estimation model relearning step, the model generation unit 32 performs relearning of a material quality estimation base model using the additional manufacturing condition data as an input and the additional quality data as an output to generate a material quality estimation model (step S6).

### (Material quality estimation method)

In the material quality estimation method according to the embodiment, the quality estimation unit 33 performs a quality estimation step of estimating quality of a manufactured product based on the material quality estimation model generated by the model generation unit 32.

### (Examples)

Example of the material quality estimation model generation method according to the embodiment will be described. In the present Example, the material quality estimation model generation method according to the embodiment was applied to manufacture of a specific product.

Specifically, in development of a new manufacturing material of a steel product, machine learning was performed using existing manufacturing condition data of an already manufactured material in actual manufacturing facilities as an input and existing quality data of the already manufactured material in actual manufacturing facilities as an output to generate a material quality estimation base model. Subsequently, transfer learning from the base model was performed using additional manufacturing condition data of a new manufacturing material in a preliminary experiment as an input and additional quality data of the new manufacturing material in the preliminary experiment as an output, and a material quality estimation model for new manufacturing material data was generated.

In the existing manufacturing data collecting step, manufacturing condition data (in-steel component) of an already manufactured material in a steelmaking step in actual manufacturing facilities and manufacturing condition data (hot rolling temperature and hot rolling speed) in a hot rolling step were collected. In addition, in the existing manufacturing data collecting step, manufacturing condition data in a cold rolling step (cold rolling speed) and manufacturing condition data in an annealing step (annealing temperature and annealing time) were collected. In addition, in the existing manufacturing data collecting step, quality data (tensile strength) of a steel sheet inspected after completion of the annealing step of the already manufactured material in the actual manufacturing facilities was collected.

In the existing manufacturing data generating step, the manufacturing condition data of the already manufactured material and the quality data of the already manufactured material were combined to generate existing manufacturing data. In this step, a leading end position and a tail end position of a product for which the quality data of the already manufactured material had been measured were associated with manufacturing condition data of the already manufactured material measured or estimated at the same position.

In the material quality estimation base model generating step, learning was performed using manufacturing condition data (in-steel component, hot rolling temperature, hot rolling speed, cold rolling speed, annealing temperature, and annealing time) of each step of the already manufactured material as an input and quality data (tensile strength) of the already manufactured material as an output. In addition, in the material quality estimation base model generating step, specifically, learning of a neural network having an input layer, an intermediate layer, a linear layer, and an output layer was performed. As a result, a material quality estimation base model was generated.

In the additional manufacturing data collecting and generating step, manufacturing condition data (in-steel component) of a new manufacturing material in a steelmaking step in a preliminary experiment, manufacturing condition data (hot rolling temperature) in a hot rolling step, and manufacturing condition data (annealing temperature and annealing time) in an annealing step were collected. In addition, in the additional manufacturing data collecting and generating step, quality data (tensile strength) of a steel sheet inspected after completion of the annealing step of the new manufacturing material in the preliminary experiment was collected.

In the additional manufacturing data generating step, the manufacturing condition data of the new manufacturing material and the quality data of the new manufacturing material were combined to generate additional manufacturing data. In this step, a position of a product for which the quality data of the new manufacturing material had been measured was associated with manufacturing condition data of the new manufacturing material measured or estimated at the same position.

In the material quality estimation model relearning step, transfer learning from the material quality estimation base model was performed using various manufacturing condition data (in-steel component, hot rolling temperature, annealing temperature, and annealing time) of each step of the new manufacturing material as an input and quality data (tensile strength) of the new manufacturing material as an output. As a result, a material quality estimation model for new manufacturing material manufacturing data was generated.

Here, in the present Example, types of the manufacturing condition data of the new manufacturing material for performing transfer learning were insufficient with respect to types of the existing manufacturing condition data to be inputs of the material quality estimation base model. Therefore, in order to match the types of conditions of the manufacturing condition data of the already manufactured material, for insufficient hot rolling speed and cold rolling speed, addition was made for each type using an average value of the type of the already manufactured material so as to perform complementation.

As described above, in the present Example, the material quality estimation base model was generated using the manufacturing data of the already manufactured material in the actual manufacturing facilities, and transfer learning from the material quality estimation base model was performed using the manufacturing data of the new manufacturing material in the preliminary experiment. As a result, the material quality estimation model that estimated a material quality of a product with high accuracy could be generated.

In the material quality estimation model generation method and the material quality estimation model generation device according to the embodiment described above, a machine learning model based on existing manufacturing data is used as a base model, and relearning is performed using preliminary experimental data (additional manufacturing data) of a new manufacturing material. As a result, it is possible to generate a model capable of estimating a material quality with high accuracy even when manufacturing data does not sufficiently exist at the time of actually manufacturing a new manufacturing material.

In addition, in the material quality estimation method and the material quality estimation device according to the embodiment, it is possible to estimate variations in material quality in a case where variations in manufacturing conditions in a new manufacturing material are assumed in advance by using the model generated as described above. In addition, in the material quality estimation method and the material quality estimation device according to the present invention, it is possible to perform material design under manufacturing conditions that do not deviate from an allowable range of quality variations. As a result, material development can be efficiently performed.

Although the material quality estimation model generation method, the material quality estimation method, the material quality estimation model generation device, the material quality estimation device, and the material quality estimation model generation system according to the present invention have been specifically described with reference to the embodiment for carrying out the invention and Example, the gist of the present invention is not limited to these descriptions, and should be widely interpreted based on the description of the claims. In addition, it goes without saying that various changes, modifications, and the like based on these descriptions are also included in the gist of the present invention.

For example, a material quality estimation model generation system may be constructed by constituting the units of the material quality estimation model generation device according to the embodiment by different devices. In this case, the material quality estimation model generation system includes a data generation device having a function similar to that of the data generation unit 31 and a model generation device having a function similar to that of the model generation unit 32.

### Reference Signs List

- 1: INFORMATION PROCESSING DEVICE
- 10: INPUT UNIT
- 20: STORAGE UNIT
- 21: OPERATIONAL DB
- 30: CALCULATION UNIT
- 31: DATA GENERATION UNIT
- 32: MODEL GENERATION UNIT
- 33: QUALITY ESTIMATION UNIT
- 40: DISPLAY UNIT

## Claims

1. A material quality estimation model generation method comprising:
a material quality estimation base model generating step of generating a material quality estimation base model by a model generation unit of a computer by performing machine learning using existing manufacturing condition data as an input and existing quality data associated with the existing manufacturing condition data as an output; and
a material quality estimation model relearning step of generating a material quality estimation model by the model generation unit by performing relearning of the material quality estimation base model using additional manufacturing condition data as an input and additional quality data associated with the additional manufacturing condition data as an output.

2. The material quality estimation model generation method according to claim 1, wherein
the existing manufacturing condition data is data regarding an existing manufacturing material, and
the additional manufacturing condition data is data regarding a new manufacturing material.

3. The material quality estimation model generation method according to claim 1, wherein the material quality estimation model relearning step includes performing, by the model generation unit, when types of the additional manufacturing condition data are insufficient with respect to types of the existing manufacturing condition data to be inputs of the material quality estimation base model, relearning of the material quality estimation base model by adding types of the additional manufacturing condition data so as to match the types of the existing manufacturing condition data.

4. The material quality estimation model generation method according to claim 3, wherein the material quality estimation model relearning step includes performing, for types of the additional manufacturing condition data insufficient with respect to the existing manufacturing condition data, addition by performing complementation for each insufficient type using a statistic of a corresponding type of the existing manufacturing condition data by the model generation unit.

5. The material quality estimation model generation method according to claim 3, wherein the material quality estimation model relearning step includes performing, for types of the additional manufacturing condition data insufficient with respect to the existing manufacturing condition data, addition by performing complementation for each insufficient type using a sample value randomly extracted from corresponding types of the existing manufacturing condition data by the model generation unit.

6. The material quality estimation model generation method according to claim 3, wherein the material quality estimation model relearning step includes
extracting locally, by the model generation unit, only manufacturing condition data similar to the additional manufacturing condition data from a set of the existing manufacturing condition data in a type of manufacturing condition data that already matches between the existing manufacturing condition data and the additional manufacturing condition data, and
performing, for types of the additional manufacturing condition data insufficient with respect to the existing manufacturing condition data, addition by performing complementation for each insufficient type using a statistic of a corresponding type of the existing manufacturing condition data by the model generation unit.

7. The material quality estimation model generation method according to claim 3, wherein the material quality estimation model relearning step includes
extracting locally, by the model generation unit, manufacturing condition data similar to the additional manufacturing condition data from a set of the existing manufacturing condition data in a type of manufacturing condition data that already matches between the existing manufacturing condition data and the additional manufacturing condition data, and
performing, for types of the additional manufacturing condition data insufficient with respect to the existing manufacturing condition data, addition by performing complementation for each insufficient type using a sample value randomly extracted from corresponding types of the existing manufacturing condition data by the model generation unit.

8. The material quality estimation model generation method according to claim 1, wherein the material quality estimation model relearning step includes generating, by the model generation unit, when types of the additional manufacturing condition data are insufficient with respect to types of the existing manufacturing condition data to be inputs of the material quality estimation base model, the material quality estimation base model by reducing the types of the existing manufacturing condition data so as to match the types of the existing manufacturing condition data.

9. The material quality estimation model generation method according to any one of claims 1 to 8, wherein a method for relearning the material quality estimation base model is transfer learning.

10. The material quality estimation model generation method according to any one of claims 1 to 8, wherein a method for relearning the material quality estimation base model is fine tuning.

11. A material quality estimation method comprising
a quality estimation step of estimating, by a quality estimation unit of a computer, quality of a manufactured product based on a material quality estimation model generated by the material quality estimation model generation method according to any one of claims 1 to 8.

12. A material quality estimation model generation device comprising
a model generation unit configured to perform machine learning using existing manufacturing condition data as an input and existing quality data associated with the existing manufacturing condition data as an output to generate a material quality estimation base model, wherein
the model generation unit is configured to perform relearning of the material quality estimation base model using additional manufacturing condition data as an input and additional quality data associated with the additional manufacturing condition data as an output to generate a material quality estimation model.

13. A material quality estimation device comprising a quality estimation unit configured to estimate quality of a manufactured product based on a material quality estimation model generated by the material quality estimation model generation device according to claim 12.

14. A material quality estimation model generation system comprising
a model generation device configured to perform machine learning using existing manufacturing condition data as an input and existing quality data associated with the existing manufacturing condition data as an output to generate a material quality estimation base model, wherein
the model generation device is configured to perform relearning of the material quality estimation base model using additional manufacturing condition data as an input and additional quality data associated with the additional manufacturing condition data as an output to generate a material quality estimation model.
